# EUROPEAN PATENT SPECIFICATION

(11) **EP 3 790 765 B1**
(45) Date of publication and mention of the grant of the patent: **11.01.2023**
(21) Application number: 19733019.4
(22) Date of filing: 24.06.2019
(51) Int. Cl.: B60P 3/34, B60R 15/02

(54) **MOTORHOME WITH A ROOM EXTENSION MODULE**
WOHNMOBIL MIT EINEM RAUMERWEITERUNGSMODUL
AUTOCARAVANE DOTÉE D'UN MODULE D'EXTENSION DE PIÈCE

(30) Priority: 25.06.2018 DE 102018210328
(43) Date of publication of application: 17.03.2021
(73) Proprietor: Protec GmbH & Co. KG, 82234 Wessling (DE)
(72) Inventor: WIETH, Franz, 82340 Feldafing (DE)
(74) Representative: von Hirschhausen, Helge
(86) International application number: PCT/EP2019/066674
(87) International publication number: WO 2020/002239

(56) References cited:
- US-A- 4 295 679
- US-A1- 2005 161 974
- US-A1- 2017 341 562
- US-B1- 6 729 678

## Description

The present invention concerns a motorhome with a superstructure which has a fixed part and displaceably attached thereto at least one first room extension module.

Such motorhomes are generally known. In the sense of this invention, a motorhome is to be understood as a motorized vehicle such as a recreational vehicle but also as a non-motorized vehicle such as a caravan. It also does not matter for which purposes the motorhome is used. It is only important that it has a superstructure which has an interior suitable for the permanent stay of people. It also makes no difference whether the motorhome is used for long journeys or very short journeys - for example within a city. US2017341562 and US2005161974 are examples of such known motor homes, whereby the latter shows a motor home according to the preamble of claim 1.

What all motorhomes have in common is that the usable interior of the superstructure of the motorhome is significantly smaller and more limited compared to non-mobile recreational, living and/or work space. It is therefore well known that lateral room extension modules with a drawerlike functional principle are arranged on the superstructure to enlarge the interior space. These room extension modules, also referred to here as slideouts, offer the possibility of extending the room of the motorhome superstructure by sliding out a part of the room which is usually open towards the inside of the vehicle. Most slideouts, therefore, have three walls, a floor and a roof. Despite the space gain that can be achieved with such a slideout, especially with small motorhomes (superstructure lengths of less than 4m) it is often not possible to accommodate every conceivable comfort wish of the user.

The object of the invention is therefore to specify a motorhome with a significantly more usable superstructure, which in particular has a layout that is still well usable even when the slideout is pushed in, and which meets the highest comfort requirements of the user when the slideout is extended.

The solution to this problem can be achieved, according to the invention, with a motorhome of the type mentioned above, in which at least one shower tray is arranged in the fixed part of the superstructure, recessed in a floor of the fixed part of the superstructure in such a way that the first room extension module can be displaced at least partially over the shower tray to cover the shower tray.

The invention is therefore based on the insight that it is precisely the shower that is not urgently needed when travelling, i.e. when the room extension module is retracted into the fixed part of the superstructure, and that it is therefore most clever to move the room extension module over a shower tray recessed in the floor. In addition, the shower is thus located close to the tanks for fresh and waste water, which are best located in the area of the fixed part of the superstructure. It is preferable if at least one shower armature is arranged in the fixed part of the superstructure.

Furthermore, a second room extension module is displaceably attached to the fixed part of the superstructure opposite the first room extension module. It has been found that it makes a lot of sense if, in addition to the first slideout, a second and best similarly large room extension module can be pushed out of the fixed part of the structure. This has the advantage that similar weight and lever ratios occur in the vehicle, especially in the extended state.

Preferably the fixed part of the superstructure has a second floor running below the shower tray, wherein the interspace between the two floors is preferably laterally closed and thermally insulated. This has the advantage that the shower tray is well protected from the weather but also from damage from below. In addition, the thermal insulation has the advantage that the tanks arranged in this area in the superstructure are protected from thermal influences, especially in winter, so that the liquids contained in them do not freeze.

Especially preferably, in the first room extension module such installations are arranged that require at least a water connection and/or a power connection. In the first room extension module, thus, at least one WC, a washbasin, a refrigerator and/or a kitchen unit with a sink is or are arranged, for example. In other words, the layout is configured in such a way that above all the kitchen and WC furniture is arranged in a group in a single room extension module. The result is functionally coherent and technically feasible furniture and room layout within the motorhome. This also has the advantage that pipes leading into tanks can be bundled and kept short. The same applies to the electrical installation and its cable ducts. It also turned out that the kitchen components, the toilet bowl and the washbasin in particular fit very well in terms of their geometric dimensions into one slideout, which in turn is about as wide as a small shower tray.

In addition, this means that in the best case the toilet, washbasin and shower are arranged so close to each other that this results in a cohesive washroom look for the users of the motorhome and they perceive the space created when the motorhome is extended as a single room almost without much thinking. This increases the user's acceptance of retractable slideouts.

It is also useful if a foldable door is arranged in front of the WC in the first room extension module. These foldable doors, also known from aircraft construction, make it possible to arrange a door in very cramped conditions in front of the toilet in a particularly economical way.

It is also advantageous if, in the fixed part of the superstructure above the shower tray, a splash guard element with variable spatial dimensions is arranged, which is preferably configured as a rollable shower wall. In the extended state of the first room extension module, this enables a particularly good spatial appearance of the shower, especially if the variable splash guard element is configured as a rollable shower wall. In addition, this has the advantage that the shower wall can be closed in a very space-saving manner and the variable splash guard element could even consist of just one shower curtain in the simplest case.

Furthermore, it is useful if extension parts of furniture and/or parts of particularly voluminous installations are arranged in the second room extension module. In particular, at least a foldable bench, an extension part of a bed, a cupboard, a storage box and/or a wall cupboard is or are arranged in the second room extension module. It has turned out that it is especially the more voluminous parts of the furniture that can be accommodated well in a separate room extension module, which is preferably arranged opposite the first. However, these are not completely but only partially accommodated there. For example, the bench of a sitting area or the bed is preferably configured segmented in such a way that a component extending this piece of furniture, such as a foldable bench or an extension part for the bed, is then accommodated in the room extension module.

Accordingly, it makes sense if at least a table, a bench, a visual protection element with variable spatial dimensions and/or a wall cupboard is arranged in the fixed part of the superstructure. This is based on the finding that especially the particularly voluminous parts of the furnishings such as the table, seating corner, dinette but also the bed or wardrobe are at least partially permanently mounted in the vehicle. After the slideout(s) have been pushed out, a mobile extension part can then easily be attached to these fixed parts. In addition, benches permanently fixed in the superstructure can be used also when travelling. For this purpose, they only have to be equipped with passenger restraint systems that are anchored to the chassis of the motorhome.

As already mentioned, it is particularly useful not to include these components in the room extension modules or to combine them with complementary foldable elements. This means, for example, that a seating group is arranged in the fixed part of the superstructure, but that an associated foldable bench is also arranged in the second room extension module. By folding out the bench, a comfortable seating group or corner bench can be created. The same applies to beds. They may have parts that can be easily folded down or up. In addition, the arrangement of wall cupboards enables optimum and space-efficient use of space in areas where no large room height is required. So it is conceivable to arrange a wall cupboard above the bed.

Furthermore, in the superstructure an enclosure for a storage box arranged on the second room extension module is arranged on which preferably the fixed part of the bed in the superstructure is arranged. This increases the use of space even more. This way the space below the beds is also usable for storing bedding and the like. The storage box can also be configured as a storage box to be opened from the outside in the sense of a garage. Then bicycles, for example, or other bulky objects can be arranged under the beds, which can be placed in or removed from the superstructure from the outside.

It also makes sense if at least one tank, preferably a fresh water tank and a waste water tank, is or are arranged in the fixed part of the superstructure. This is particularly useful because tanks are very heavy when filled and it makes little sense to move them with the room extension modules.

In the following, the invention will be explained in more detail using the examples shown in the drawings, wherein schematically show:
- Fig. 1: a perspective view of a first embodiment of a motorhome according to the invention in the traveling state;
- Fig. 2: the embodiment shown in Fig. 1 in the state with the room extension module extended;
- Fig. 3: a horizontal section through the superstructure of a second embodiment of a motorhome according to the invention in the traveling state with retracted room extension modules;
- Fig. 4: the section shown in Fig. 3 through the second embodiment with laterally extended room extension modules (living state);
- Fig. 5: a vertical section through the second embodiment of a motorhome according to the invention shown in Fig. 3 with a view from the driver's cab towards the rear of the vehicle;
- Fig. 6: the embodiment shown in Fig. 5 with extended room extension modules (living state);
- Fig. 7: the vertical longitudinal section through the second embodiment of a motorhome according to the invention shown in Fig. 3 or Fig. 5 with a view to the right side of the passenger compartment in the direction of travel of the vehicle;
- Fig. 8: a section as shown in Fig. 7 with a view to the left-hand components of the motorhome in the direction of travel.

In the figures, identical reference numerals indicate identical components, even if they are drawn in the different embodiments.

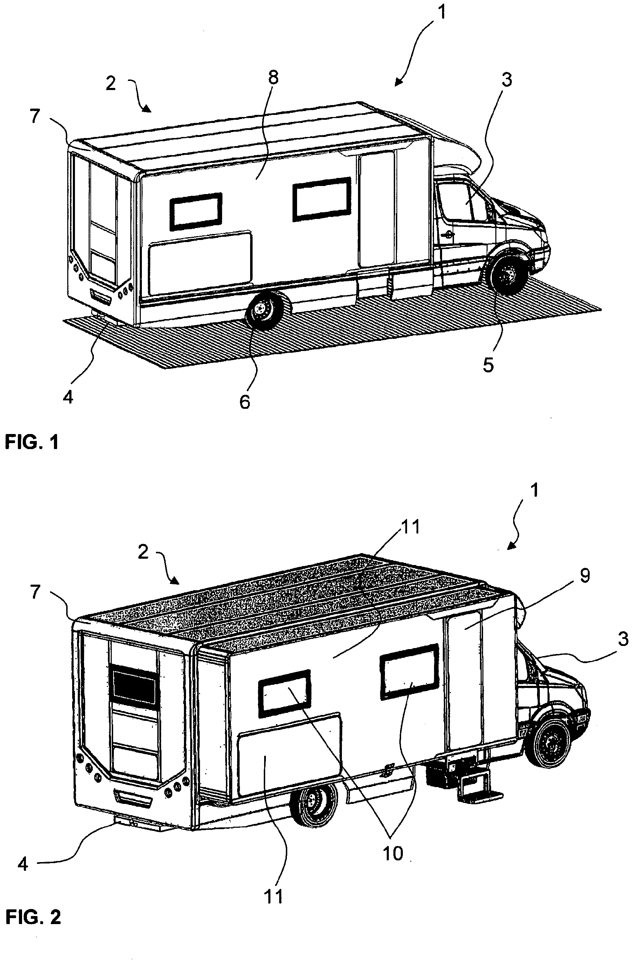

Fig. 1 shows a first embodiment of a motorhome 1 according to the invention with a superstructure 2, which has a driver's cab 3 at the front in the direction of travel, a chassis 4 with front axle 5 and rear axle 6. As can be seen in Fig. 2, a first room extension module 8 on the right can be pushed out of superstructure 2 to enlarge the interior of superstructure 2. Accordingly, the superstructure 2 has a fixed part 7 to which the room extension module 8 is displaceably attached. As can be seen in Fig. 2, the room extension module 8 has an entrance door 9 and two windows 10. Furthermore there is a lid 11 in the room extension module 8 for a storage box 31 behind it.

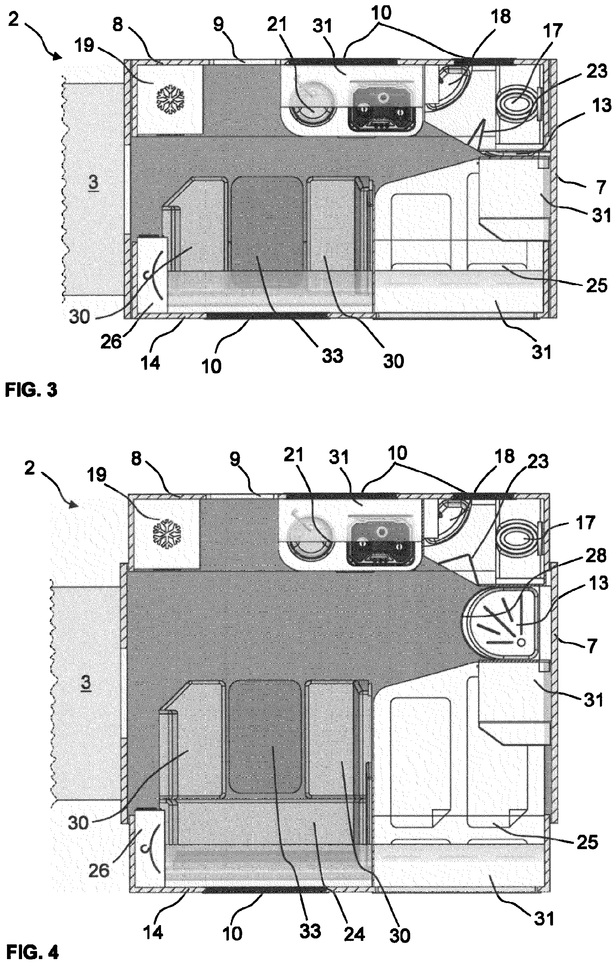

In accordance with the invention, at least one shower tray 13 recessed in the floor 12 is arranged in the fixed part 7 of superstructure 2 in such a way that the first room extension module 8 can be displaced at least partially over the shower tray 13. In the embodiment shown in Fig. 3, the first room extension module 8 can be moved into the fixed part of superstructure 7 to such an extent that the shower tray 13 is almost completely covered.

There is also a second room extension module 14. As can be seen in particular from the comparison of Fig. 3 with Fig. 4, the two room extension modules 8 and 14 are both equally wide, equally long and equally high, so that a symmetrical structure results in the extended state. The depth of the room extension modules 8 and 14 is selected so that a user of the motorhome can walk from driver's cab 3 to toilet 17 through superstructure 2 also in the retracted state, as can be seen in Fig. 3. The width of the passage, however, is naturally increased by the lateral sliding out of the two room extension modules 8 and 14, as can be clearly seen especially in Fig. 4. Then also the shower tray 13 recessed in the upper floor 12 becomes visible.

To protect the shower tray 13, but also any tanks and technical equipment not shown here in detail, a second floor 15 is arranged below the first floor 12, so that the shower tray 13 lies practically between these two floors and is well protected from the weather and external influences particularly by the lower floor 15. Also not shown here is the thermal insulation, which is also provided for this area 16, so that frost damage and the like cannot occur in the tanks arranged in the interspace 16.

A special highlight of the layout configuration is that in the first room extension module 8, next to the access door 9 for superstructure 2, a WC 17, a washbasin 18, a refrigerator 19 and/or a kitchen unit 20 with a sink 21 and a stove 22 are arranged. These require similar technical connections or installations (in this case water pipes and/or power connections). They are therefore grouped into function groups. In other words, the components that require a water connection or a power connection are all grouped together in the first room extension module 8. Thus the corresponding tanks can be arranged close to these components or furniture in the chassis 4. The wires and cables can also be arranged bundled accordingly in this part of the assembly 2. In addition, a logical grouping results for the users of the motorhome 1 according to the invention, which they usually also know from normal houses, where kitchens and toilets are often grouped together and can usually be found near the entrance areas.

As can be seen in Fig. 3 and Fig. 4, it makes sense that the toilet 17 is adjacent to the shower and a small toilet room with a foldable door 23 is provided, this type of door also being known from aircraft construction. Thus a relatively compact toilet cell can be arranged in the room extension module 8, which can be pushed over the shower tray 13 according to the invention.

The furnishing of the second room extension module 14 has also been carried out in a similarly logical manner. The second room extension module 14 contains a foldable bench 24, a bed extension part 25 of a bed, a fixed cupboard 26 in the corner on the left and a wall cupboard 31 above the foldable bench 24 and above the window 10.

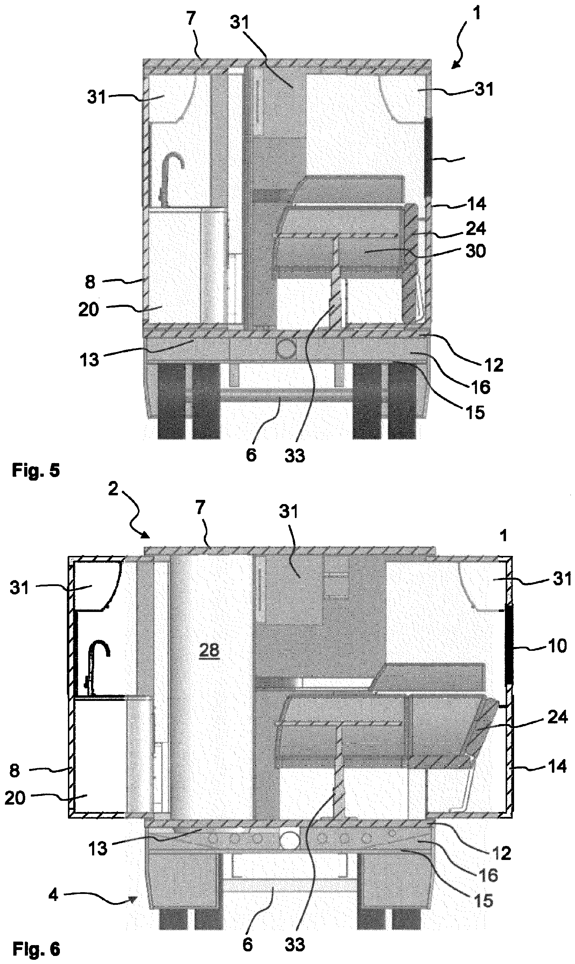

In the fixed part of the superstructure there is a shower armature not shown here in detail and such parts of the furniture which are also connected to the chassis 4 of the motorhome 1. These include in particular benches 30, which must also be equipped with passenger restraint systems connected to chassis 4. It also makes sense to firmly mount table 33 between the two benches 30. As the bench 24 is foldable, it can then be brought into vertical orientation as shown in Fig. 5 so that it takes up very little space and is practically pushed in front of table 33. When the slideout 14 is extended, the foldable bench 24 is folded out of its vertical position. The result is a horizontal seat cushion and a diagonally upwards back cushion. This gives the impression of a cosy sitting area arranged around table 33.

Next to this seating area there is a bed consisting of a fixed part 29 and a bed extension part 25. The bed extension part 25 can be used as the head end of the bed and can, for example, simply be folded, pushed, or retracted onto the fixed part 29 of the bed or extend the bed in any other kind of way. It can also be folded up into a vertical position. Above the bed there is again a wall cupboard 31 just as above the foot of the bed there is another wall cupboard 31.

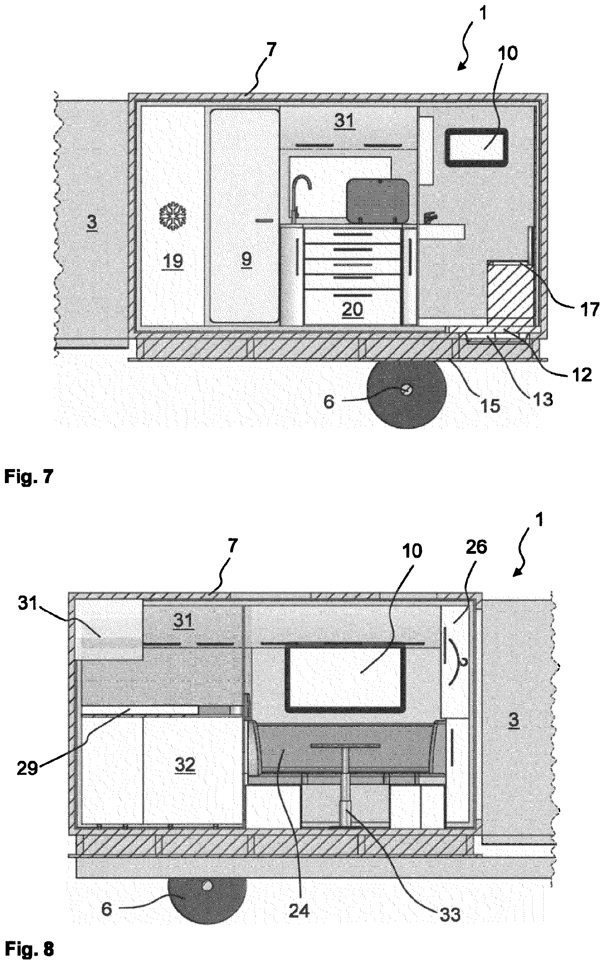

As can be seen in particular from the longitudinal sections in Fig. 7 and Fig. 8, below the fixed part 29 of the bed there is a storage box 32 arranged on the second room extension module. This storage box 32 is displaced into an enclosure that forms the base of the fixed part 29 of the bed. In this storage box 32 for example bicycles or the like can be stored, since it is ideally accessible from the outside via a lid 11, as it was already schematically shown in a similar way in Fig. 1 or 2 in the first embodiment.

### Reference numerals

- 1.: motorhome
- 2.: superstructure
- 3.: driver's cab
- 4.: chassis
- 5.: front axle
- 6.: rear axle
- 7.: fixed part of the superstructure
- 8.: first room extension module
- 9.: door
- 10.: window
- 11.: lid for storage box
- 12.: floor of the fixed part of the superstructure
- 13.: shower tray
- 14.: second room extension module
- 15.: lower floor
- 16.: interspace between the two floors
- 17.: WC
- 18.: washbasin
- 19.: refrigerator
- 20.: kitchen unit
- 21.: sink
- 22.: stove
- 23.: foldable door
- 24.: foldable bench
- 25.: bed extension part
- 26.: cupboard
- 27.: wall cupboard
- 28.: splash guard element as rollable shower wall
- 29.: fixed part of a bed
- 30.: bench
- 31.: wall cupboard
- 32.: storage box
- 33.: table

## Claims

1. Motorhome (1) with a superstructure (2) which has a fixed part (7) and displaceably attached thereto at least one first room extension module (8), wherein the first room extension module (8) is laterally slid out of the fixed part (7) and retracted into the fixed part (7),
**characterized in that**
at least one shower tray (13) is arranged in the fixed part (7) of the superstructure (2), recessed into a floor (12) of the fixed part (7) of the superstructure (2) in such a way that the first room extension module (8) can be displaced at least partially over the shower tray (13) to cover the shower tray (13).

2. Motorhome according to claim 1,
**characterized in that**
a second room extension module (14) is displaceably attached to the fixed part (7) of the superstructure (2) opposite the first room extension module (8).

3. Motorhome according to any one of the preceding claims,
**characterized in that**
the fixed part (7) of the superstructure (2) has a second floor (15) running below the shower tray (13) and the interspace (16) between the two floors (12, 15) is preferably laterally closed and thermally insulated.

4. Motorhome according to any one of the preceding claims,
**characterized in that**
at least one shower armature is arranged in the fixed part (7) of the superstructure (2).

5. Motorhome according to any one of the preceding claims,
**characterized in that**
in the first room extension module (8) such installations are arranged that require at least a water connection and/or a power connection, in particular at least a WC (17), a washbasin (18), a refrigerator (19) and/or a kitchen unit (20) with a sink (21) is or are arranged in the first room extension module (8).

6. Motorhome according to any one of the preceding claims,
**characterized in that**
a foldable door (23) is arranged in front of a WC (17) in the first room extension module (8).

7. Motorhome according to any one of the preceding claims,
**characterized in that**
extension parts of furniture and/or parts of particularly voluminous installations are arranged in a second room extension module (14), in particular, at least a foldable bench (24), an extension part (25) of a bed, a cupboard (26), a storage box (32) and/or a wall cupboard (31) is or are arranged in the second room extension module (14).

8. Motorhome according to any one of the preceding claims,
**characterized in that**
in the fixed part (7) of the superstructure (2) above the shower tray (13), a splash guard element (28) with variable spatial dimensions is arranged, which is preferably configured as a rollable shower wall.

9. Motorhome according to any one of the preceding claims,
**characterized in that**
at least a table (33), a fixed part (29) of a bed, a bench (33), a visual protection element with variable spatial dimensions and/or a wall cupboard (31) is or are arranged in the fixed part (7) of the superstructure (2).

10. Motorhome according to any one of the preceding claims,
**characterized in that**
an enclosure for a storage box (32) arranged on a second room extension module (14), on which preferably a fixed part (29) of a bed in the superstructure (2) is arranged, is arranged in the superstructure (2).

11. Motorhome according to any one of the preceding claims,
**characterized in that**
at least one tank, preferably a fresh water tank and a waste water tank, is or are arranged in the fixed part (7) of the superstructure (2).

## Patentansprüche

1. Reisemobil (1) mit einem Aufbau (2), der einen feststehenden Teil (7) und wenigstens ein daran verschieblich befestigtes erstes Raumerweiterungsmodul (8) aufweist, wobei das erste Raumerweiterungsmodul (8) seitlich aus dem feststehenden Teil (7) ausgeschoben und in den feststehenden Teil (7) hineingefahren wird,
**dadurch gekennzeichnet, dass**
im feststehenden Teil (7) des Aufbaus (2) wenigstens eine so in einen Boden (12) des feststehenden Teils (7) des Aufbaus (2) versenkte Duschwanne (13) angeordnet ist, dass das erste Raumerweiterungsmodul (8) zumindest teilweise über die Duschwanne (13) verschoben werden kann, um die Duschwanne (13) zu überdecken.

2. Reisemobil nach Anspruch 1,
**dadurch gekennzeichnet, dass**
am feststehenden Teil (7) des Aufbaus (2) ein zweites Raumerweiterungsmodul (14) verschieblich und dem ersten Raumerweiterungsmodul (8) gegenüberliegend befestigt ist.

3. Reisemobil nach einem der vorhergehenden Ansprüche,
**dadurch gekennzeichnet, dass**
der feststehende Teil (7) des Aufbaus (2) einen unterhalb der Duschwanne (13) verlaufenden zweiten Boden (15) aufweist und der Zwischenraum (16) zwischen den beiden Böden (12,15) vorzugsweise seitlich verschlossen und thermisch isoliert ist.

4. Reisemobil nach einem der vorhergehenden Ansprüche,
**dadurch gekennzeichnet, dass**
im feststehenden Teil (2) des Aufbaus (7) wenigstens eine Duscharmatur angeordnet ist.

5. Reisemobil nach einem der vorhergehenden Ansprüche,
**dadurch gekennzeichnet, dass**
im ersten Raumerweiterungsmodul (8) solche Einbauten angeordnet sind, die wenigstens einen Wasseranschluss und/oder einen Stromanschluss benötigen, insbesondere ist bzw. sind im ersten Raumerweiterungsmodul (8) wenigstens ein WC (17), ein Waschbecken (18), ein Kühlschrank (19) und/oder eine Küchenzeile (20) mit einem Abwaschbecken (21) angeordnet.

6. Reisemobil nach einem der vorhergehenden Ansprüche,
**dadurch gekennzeichnet, dass**
im ersten Raumerweiterungsmodul (8) eine faltbare Tür (23) vor einem WC (17) angeordnet ist.

7. Reisemobil nach einem der vorhergehenden Ansprüche,
**dadurch gekennzeichnet, dass**
in einem zweiten Raumerweiterungsmodul (14) Verlängerungsteile von Möbeln und/oder Teile von besonders voluminösen Einbauten angeordnet sind, insbesondere ist bzw. sind im zweiten Raumerweiterungsmodul (14) wenigstens eine klappbare Sitzbank (24), ein Verlängerungsteil (25) eines Bettes, ein Schrank (26), eine Staubox (32) und/oder ein Hängeschrank (31) angeordnet.

8. Reisemobil nach einem der vorhergehenden Ansprüche,
**dadurch gekennzeichnet, dass**
im feststehenden Teil (7) des Aufbaus (2) oberhalb der Duschwanne (13) ein in seiner räumlichen Ausdehnung variables Spritzschutzelement (28) angeordnet ist, das vorzugsweise als einrollbare Duschwand ausgebildet ist.

9. Reisemobil nach einem der vorhergehenden Ansprüche,
**dadurch gekennzeichnet, dass**
im feststehenden Teil (7) des Aufbaus (2) wenigstens ein Tisch (33), ein feststehender Teil (29) eines Bettes, eine Sitzbank (33), ein in seiner räumlichen Ausdehnung variables Sichtschutzelement und/oder ein Hängeschrank (31) angeordnet ist bzw. sind.

10. Reisemobil nach einem der vorhergehenden Ansprüche,
**dadurch gekennzeichnet, dass**
im Aufbau (2) eine Einhausung für eine an einem zweiten Raumerweiterungsmodul (14) angeordnete Staubox (32) angeordnet ist, auf der vorzugsweise ein feststehender Teil (29) eines Bettes im Aufbau (2) angeordnet ist.

11. Reisemobil nach einem der vorhergehenden Ansprüche,
**dadurch gekennzeichnet, dass**
im feststehenden Teil (7) des Aufbaus (2) wenigstens ein Tank, vorzugsweise ein Frischwasser- und ein Abwassertank, angeordnet ist bzw. sind.

## Revendications

1. Autocaravane (1) comprenant une superstructure (2) qui comprend une partie fixe (7) et, attaché de façon déplaçable à celle-ci, un premier module (8) d'extension d'espace, le premier module (8) d'extension d'espace étant destiné à être étendu de la partie fixe (7) et retracté dans la partie fixe (7) latéralement et de façon coulissante,
**caractérisée en ce que**
au moins un receveur de douche (13) est disposé dans la partie fixe (7) de la superstructure (2), encastré dans un plancher (12) de la partie fixe (7) de la superstructure (2) de façon que le premier module (8) d'extension d'espace peut être déplacé en moins en partie par-dessus du receveur de douche (13) de façon à couvrir le receveur de douche (13).

2. Autocaravane selon la revendication 1,
**caractérisée en ce que**
un deuxième module (14) d'extension d'espace est attaché de façon déplaçable à la partie fixe (7) de la superstructure (2) opposé au premier module (8) d'extension d'espace.

3. Autocaravane selon l'une quelconque des revendications précédentes,
**caractérisée en ce que**
la partie fixe (7) de la superstructure (2) comprend un deuxième plancher (15) qui s'étend au-dessous du receveur de douche (13) et l'écartement (16) entre les deux planchers (12, 15) est de préférence latéralement fermé et thermiquement isolé.

4. Autocaravane selon l'une quelconque des revendications précédentes,
**caractérisée en ce que**
au moins un robinet de douche est disposé dans la partie fixe (7) de la superstructure (2).

5. Autocaravane selon l'une quelconque des revendications précédentes,
**caractérisée en ce que**
dans le premier module (8) d'extension d'espace telles installations sont disposées qui exigent au moins une alimentation en eau et/ou une alimentation électrique, en particulier au moins une toilette (17), un lavabo (18), un réfrigérateur (19) et/ou une unité de cuisine (20) avec un évier (21) est ou sont disposé(s) dans le premier module (8) d'extension d'espace.

6. Autocaravane selon l'une quelconque des revendications précédentes,
**caractérisée en ce que**
une porte pliable (23) est disposée devant une toilette (17) dans le premier module (8) d'extension d'espace.

7. Autocaravane selon l'une quelconque des revendications précédentes,
**caractérisée en ce que**
des parties d'extension des meubles et/ou des parties d'installation particulièrement volumineuses sont disposées dans un deuxième module (14) d'extension d'espace, en particulier au moins une banquette pliable (24), une partie d'extension (25) d'un lit, une armoire (26), un coffre de rangement (32) et/ou un placard (31) est ou sont disposé(s) dans le deuxième module (14) d'extension d'espace.

8. Autocaravane selon l'une quelconque des revendications précédentes,
**caractérisée en ce que**
dans la partie fixe (7) de la superstructure (2) au-dessus du receveur de douche (13), un capot de protection (28) à dimensions spatiales variables est disposé qui est de préférence configuré en forme de paroi de douche enroulable.

9. Autocaravane selon l'une quelconque des revendications précédentes,
**caractérisée en ce que**
au moins une table (33), une partie fixe (29) d'un lit, une banquette (33), un élément de protection visuelle à dimensions spatiales variables et/ou un placard (31) est ou sont disposé(s) dans la partie fixe (7) de la superstructure (2).

10. Autocaravane selon l'une quelconque des revendications précédentes,
**caractérisée en ce que**
une enceinte pour un coffre de rangement (32) disposée sur le deuxième module (14) d'extension d'espace, sur laquelle de préférence une partie fixe (29) d'un lit dans la superstructure (2) est disposée, est disposée dans la superstructure (2).

11. Autocaravane selon l'une quelconque des revendications précédentes,
**caractérisée en ce que**
au moins un réservoir, de préférence un réservoir d'eau fraiche et un réservoir d'eau usée, est ou sont disposé(s) dans la partie fixe (7) de la superstructure (2).
